# EUROPEAN PATENT SPECIFICATION

(11) **EP 4 334 069 B1**
(45) Date of publication and mention of the grant of the patent: **10.12.2025**
(21) Application number: 22842544.3
(22) Date of filing: 13.07.2022
(51) Int. Cl.: B23D 55/08, B26D 1/54

(54) **BLADE GUIDE WITH REPLACEABLE SURFACES**
KLINGENFÜHRUNG MIT AUSTAUSCHBAREN OBERFLÄCHEN
GUIDE-LAME À SURFACES REMPLAÇABLES

(30) Priority: 14.07.2021 NZ 21778199
(43) Date of publication of application: 13.03.2024
(73) Proprietor: Kando Innovation Limited, Auckland 1060 (NZ)
(72) Inventor: MADDEVER, George, Wellington Auckland, 1060 (NZ); BLENKINSOPP, Keith, Wellington Auckland, 1060 (NZ)
(74) Representative: Murgitroyd & Company
(86) International application number: PCT/NZ2022/050095
(87) International publication number: WO 2023/287305

(56) References cited:
- US-A- 4 920 846
- US-A- 542 656
- US-A1- 2017 320 149
- VESPER TOOLS AUSTRALIA: "Band Saw Guides", VESPER TOOLS NEWSLETTER, 6 March 2021 (2021-03-06), pages 1 - 3, XP093026760, Retrieved from the Internet <URL:https://vespertools.com.au/band-saw-guides/> [retrieved on 20230224]

## Description

### FIELD

This invention relates to disposable guides for a saw blade; in particular to guides to support a bandsaw blade and maintain the blade along an intended course upon a bandsaw when in use.

### BACKGROUND

Although the blade of a bandsaw, to name the most relevant kind of cutting machine, is normally held under substantial tension during use, the blade may be displaced sideways by a maintained sideways pressure or during an emergency braking procedure when tension may have been removed from the blade before the support wheels and the blade have come to rest. The blade guide is also intended to restrict sideways movement of the blade in event of breakage. The blade slides between the rubbing faces of two guide shoes that restrict sideways movement of the blade.

The publication, Vesper Tools Newsletter of 06 March 2021, pages 3 to 6, XP 09302670 discloses a blade guide for use as an accessory for a cutting machine of a type having an elongated saw blade in the form of a band held in tension, the blade having two sides and teeth formed along an edge; the band being carried across a cutting volume by a motor driving at least one of at least two support pulleys; wherein the blade guide consists of a shaft mountable on a frame of the cutting machine in order to support a head in a fixed position relative to the blade of the cutting machine; the head is configured so as to form a secure yet reversible interlocking connection with each of two replaceable guide shoes disposed one on each side of the blade; each shoe presenting a selected rubbing surface close to an adjacent side of the blade and thereby when in use limiting sideways deflection of the blade within the volume by contact between a side of the blade and an adjacent rubbing surface; wherein each replaceable guide shoe may be reversibly mounted on to the head in one of a plurality of orientations thereby providing a plurality of alternative rubbing surfaces.

### PROBLEM TO BE SOLVED

The invention seeks to provide an effective blade guide.

### SUMMARY OF INVENTION;

In a first broad aspect the invention provides a blade guide as claimed in claim 1.

Preferably each replaceable guide shoe has a symmetrical four-sided profile in order to provide four rubbing surfaces about the periphery of the shoe; any one of which surfaces is selected by reversibly attaching the replaceable guide shoe on to the head in a selected one of four orientations.

Preferably the symmetrical profile resembles a parallelogram.

Preferably each guide shoe has a symmetrical structure about three axes: top to bottom, left to right, and front surface to back surface.

Preferably, both of the replaceable guide shoes are identical. Preferably each guide shoe has a construction including:
a surrounding or peripheral bar configured as a four-sided parallelogram shaped profile wherein each one of the four outer sides comprises one separate rubbing surface along an edge of a peripheral bar;
within a space defined by the parallelogram shaped peripheral bar outer sides a set of four resilient clips capable when in use of engaging with complementary cavities within a supporting shape upon the head is located; and
the resilient clip being capable, when in use, of allowing each guide shoe to be removed from the head by the operator and replaced.

The head carries a mirror-image pair of a set of two nested parallelograms raised outward from the substance of the head; each set being configured in order to serve, when in use, as a connector for reversibly holding one shoe in place.

Preferably each of the two sets of two nested parallelograms of the head includes an outer restraining group of surfaces having an outline in the form of a parallelogram and disposed in order to make contact with all inner side surfaces of the four-sided profile on one side of one shoe, and includes an inner interlocking group of mating surfaces in the form of a second parallelogram including complementary socket areas capable when in use of making a reversible locking contact with corresponding inner detailed and resiliently mounted protrusions upon strips of a web within the interior of the shoe.

Preferably each set of two nested parallelograms of the head includes an inner interlocking group of mating surfaces in the form of a second parallelogram including complementary detailed areas capable when in use of making a reversible locking contact with corresponding inner detailed and resiliently mounted surfaces upon strips of a web within the interior of the shoe.

Preferably the inner locking mechanism is provided along inner edges of an internal web and preferably each of four strips bearing a protruding part-cylindrical detail edges on an inner face is moulded in an arcuate shape in order to provide some resilience.

Preferably the shoe is moulded in a thermoplastics selected from a range including acetal and glass-filled acetal.

Optionally, the shoe is moulded in order to incorporate a ceramic button surface within the face of each wearable surface.

### PREFERRED EMBODIMENT

The description of the invention provided herein is given purely by way of example and is not to be taken in any way as limiting the scope or extent of the invention. References to "bandsaw" are to a most likely kind of cutting machine in which a saw blade as an endless strip and having teeth along an edge may benefit from installation of a guide to prevent the saw blade wandering from side to side. The invention has been described in an illustrative manner, and it is to be understood that the terminology which has been used is intended to be in the nature of words of description rather than of limitation.

Terms in this specification describing position and attitude such as "above", "below", and "vertical" assume the usual orientation of a bandsaw used for cutting and dismembering, in which a continuous steel blade is powered so as to cut vertically down through a saw table. Such terms may be rotated for bandsaws used in other attitudes such as in some metal fabrication industries.

Any dimensions given relate to a prototype example and are not limiting.

### DRAWINGS

Fig 1 is an elevation view of the head of the blade guide 100 including shoes. Fig 2 is an oblique view of the head of the blade guide with the shoes removed. Fig 3 is the left-hand shoe of Fig 2.
Fig 4 is the right-hand shoe of Fig 2.
Fig 5 is a cross-section through a first shoe of the invention
Fig 6 is a cross-section through the second shoe of the invention attached to the head
Fig 7 is a face view of a shoe showing details.
Fig 8 is a side view of the blade guide, showing the head and the shaft.

### EXAMPLE 1.

This invention relates to an improved design of blade guide shoes, used in pairs, and a matching holder. Each of two identical, replaceable shoes has been moulded in an appropriate thermoplastics to have four equivalent positions. Each shoe, and the corresponding mount, is designed with symmetry so that a shoe can be held in any of four orientations. As one rubbing face becomes worn, the shoe can be taken off and repositioned with a fresh surface until all four surfaces are exhausted.

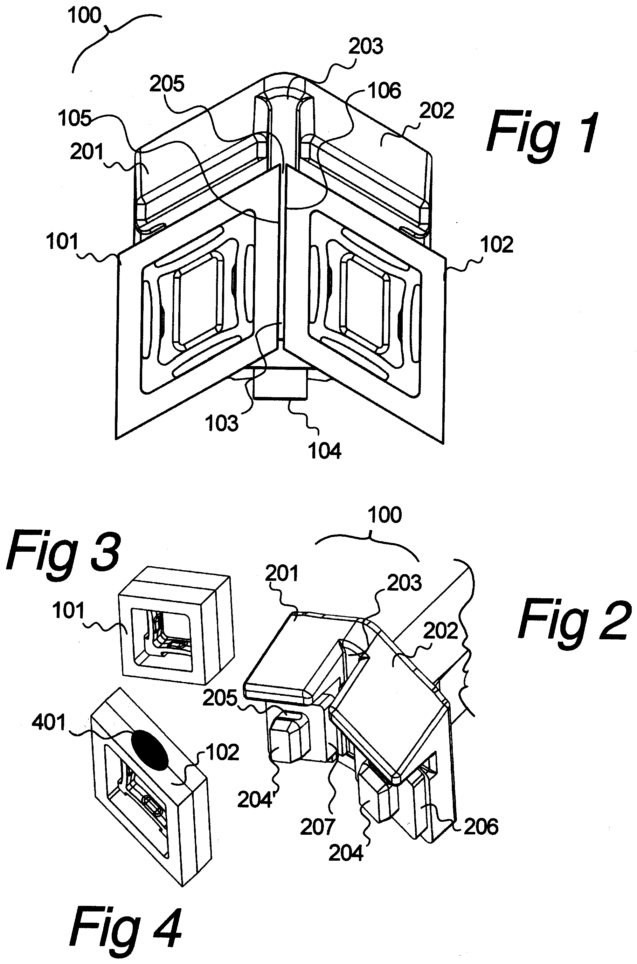

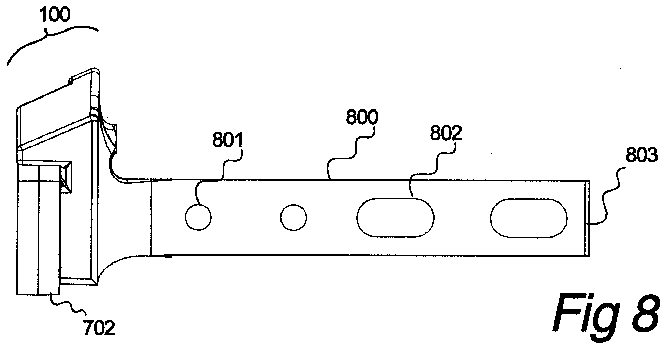

The blade guide for a bandsaw blade (not shown) comprises a rigid shaft or beam that can be clamped or bolted on to or through a frame of the bandsaw, and a head that is configured to hold two low-friction, replaceable shoes, each being usable in one of four orientations. Fig 1 is a face on view of the blade guide 100 including shoes 101 and 102. Fig. 8 is a side elevation view, showing the head bearing a replaceable shoe 102. The other shoe 101 is obscured in this view. Fig 2 shows the head without shoes in an oblique view.

The blade guide is preferably comprised of a food-grade stainless steel. It is preferably cast and the head is subsequently machined in order to complete forming the shoe connectors. Machined surfaces allow the shoes to be securely mounted yet easily be removed for replacement or rotation and remounting in a different orientation in order to present new wearing surfaces to the blade.

### SHAFT

The following dimensions relate to a prototype and may be varied for particular band saws. The shaft or bar 800 that supports the head 100 has a rectangular section 14 mm thick and 21 mm high, and has a length from the head to the other end 803 of 150 mm. The position of the mounting holes 801 or slots 802 for secure attachment to the bandsaw frame and controlled positioning of the blade guide relative to the frame depends on the configuration of the bandsaw on which the blade guide is mounted. Slot-shaped holes allow adjustment. Preferably, an attachment point is selected in order that the blade will run within the space between the two shoes 101 and 102; that is, inside the gap 103, at which site the blade is intended to receive support.

### HEAD

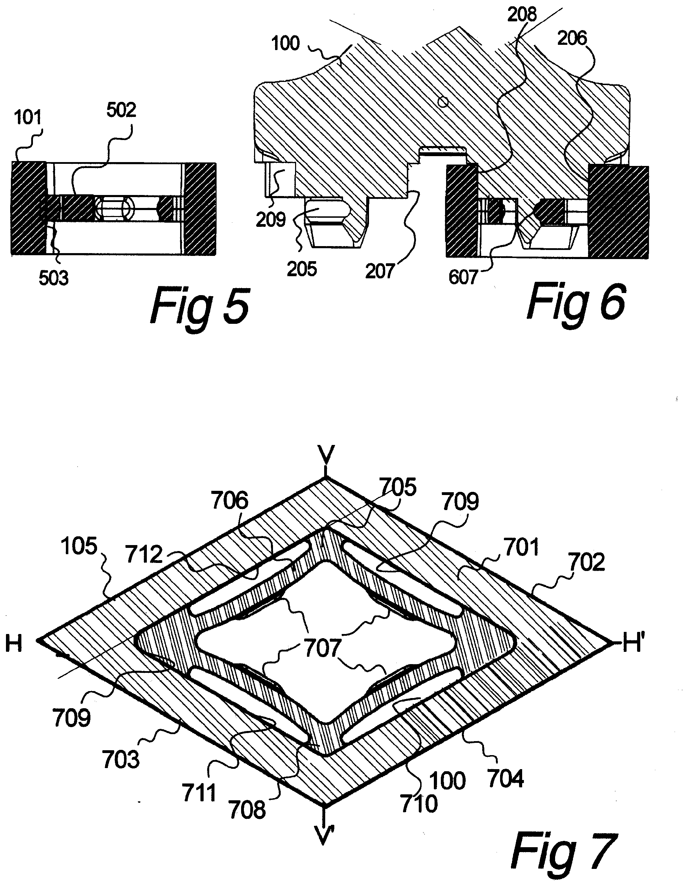

Fig 1 shows a front elevation view of the head 100 with the shoes 101 and 102 in place. Fig 2 shows a side oblique view of the head 100, with both shoes removed. Fig 6 is a cross-section in a horizontal plane through the head 100, cutting though one shoe (sectioned as 206) in place. Again, the following dimensions relate to a prototype and may be varied for particular band saws.

The head of the blade guide, indicated as 100 in Figs 1 and 8, provides reversible mounts for two identical, replaceable plastic shoes 101 and 102; see Fig 7 (end view) and Fig 5 (section). In Fig 1, the thickness of each shoe lies directly behind the visible surface. One shoe is located on each side of the blade of the bandsaw. The opposing rubbing faces 105, 106 of the two shoes are separated by a blade space 103 about 1-2 mm in width if the shoe faces are not worn. The head includes a rigid down-sloping and sideways-sloping shield 201 and 202, having a central slot 203 to accommodate the blade. 104 is a head of an optional clamp screw. It formed a part of the prototype.

Each head includes two groups of parallelogram shapes machined into the metal of the blade guide with one group located on each side of a central groove. Each group is a mirror image of the other group and both are in the same plane as shown in Fig 6. Each group has the function of fixing one replaceable shoe in a vertical plane perpendicular to an axis of the bar. Each group comprises a smaller raised (by 3.5 mm) parallelogram 204, 204' symmetrically placed upon a larger raised (by 4 mm) parallelogram with side surfaces visible in Fig 2 as 206 (right side) and 207 (left side) and in a section (Fig 6) for the right side as 206 and 208. The front aspects of the larger parallelograms become held in contact with inner surfaces of the exterior bars 701 of the shoes (see 206 and 208 in Fig 6). Each smaller raised parallelogram 204, 204' includes a milled groove 205, 607 having a semicircular inset profile in section along both short sides; an upper aspect and a lower aspect, for the purpose of reversible retention of the shoes by means of raised rounded part-cylindrical bars 707 included in the shoe. In the prototype, the longer and vertical sides of the smaller parallelogram do not form a locking engagement with the shoe although extra grooves may be added. The smaller raised parallelograms have chamfered edges (not labelled) to help guide a shoe into position.

### SHOE

Each shoe is a moulded plastics article, preferably comprised of a glass-filled thermoplastics material such as polyoxymethylene (POM) commonly known as acetal, or a comparable plastics material. Brands available at the time of filing include "Delrin", "Kocetal", "Celcon", "Ultraform" and "Hostaform". Apart from mechanical requirements, any selected material should be fully acceptable as a potential food contaminant since wear of the rubbing surface will occur over time by contact with the bandsaw blade. The groups are spaced apart in order that when two shoes (see below) are mounted on the head, a space of approximately 2 mm remains as a space for the saw blade between the adjacent rubbing surfaces of the two shoes. Each shoe, as shown in plan view in Fig 7, has a continuous and closed exterior bar 101 (Fig 3) or 701 (Fig 7) having a symmetrical diamond-shaped profile. The exterior bar is comprised of four exterior rubbing faces 105, 702, 704 and 703 each supported on a thick bar moulded together in a parallelogram shape. Figs 3 and 4 show shoes in the same oblique attitudes as the oblique attitude of the head in Fig 2. Figs 5 and 6 show cross-sections through two shoes.

A horizontal axis of symmetry runs through the horizontal axis H-H', and a vertical axis of symmetry runs through the axis V-V' as shown in Fig 7. Further, the front and the back of the shoe are identical. The shape of the shoe allows the shoe to be taken off, rotated and/or flipped, and fixed on to the head until all four sides are worn.

The non-limiting measurements provided below are presently preferred for bandsaws used to process meat in a meat processing plant. Larger or smaller shoes may be preferred, such as for metal-cutting bandsaws or for bandsaws used in retail butcheries. For the prototype shoe, the height from front to back of the four-part exterior bar 701 is 11.5 mm, the thickness of the bar is 4 mm though with a slightly wider central axis for better mould release, and the length of each rubbing face 105, 702, 703, 704 is 30 mm. The interior of each shoe, as best shown in Fig 7, includes an about 3 mm thick web 502 which is moulded in order to create a symmetrical set of four internal strips. An example strip is labelled 706. All strips are anchored at each end to adjacent internal corners of the shoe and their midparts are free, as shown in Fig 7. A preferred shoe retaining mechanism comprises a slight centripetal curve along each free strip 706 that is designed, having in mind the preferred thermoplastics, to provide a resilient force to maintain the protrusion 707 of each of two opposite strips into a corresponding socket of the head and maintain the position of the shoe when in position. Each shoe becomes reversibly locked by engagement of the raised rounded part-cylindrical bar 707 along each moulded strip 706 into an extended and complementary groove 205, 607 cut or otherwise formed into the internal diamond-shaped protrusion 203, 204 of the head of the blade guide. Two such grooves appear to be sufficient. The assembly engages shapes 707 against the head at two opposite sides of the shoe when the shoe is in place. The curved resilient strips 706 are stiff enough to maintain the slider in place during use. Forces arising from interaction with the blade are transmitted past the locking strips and have no effect on retention by the separate reversibly locked connections. But the connections do not prevent the shoe from being pulled straight off the head by the operator using finger pressure when a new surface or a new shoe is required.

Wear of the rubbing face (one of 105, 702, 703 and 704) of an exterior bar is inevitable and results in a loss of thickness of that face, requiring action. Each shoe can be removed in an outward direction, rotated through 180 degrees and replaced. A fresh face is then presented to the blade. Preferably both shoes will be turned and replaced at the same time. After those surfaces are worn, two more wearing surfaces are accessed by flipping the shoe from front to back since it is symmetrical about a plane occupied by the web and then replacing the shoe. After four surfaces are worn, the shoe must be replaced.

Although the operator may pull the shoe off the blade guide with ease against the resilience of the curved internal strips, each shoe is held in place against forces arising from blade contact with the bandsaw blade as it slides through the guide. A second set of contact surfaces 709, 710, 711 and 712 all lie against corresponding exposed surfaces 206, 207, 208 and 209 of each larger raised parallelogram on the blade guide head as shown in Fig 2 and Fig 6. The shapes and positions of the parts of the shoes together with the head of the blade guide in contact have the effect that forces arising from friction with the bandsaw blade or adherent material are not carried to the separate reversibly locked connections. Nor are the separate reversibly locked connections affected by wear of the shoe exterior.

### EXAMPLE 2.

Example 2 describes inclusion within the material of the outer faces 105, 702, 703 and 704 of a button, or perhaps a strip, or a pair of buttons, or distributed placement in a leading and a trailing position in each face. That may be comprised of a ceramic material incorporated within the plastics of the shoe and has a surface that becomes exposed during use. See 401 in Fig 4, for an example. That can be done as a type of co-moulding process. Since the ceramic is relatively hard, wear of the shoe will be reduced. The altered shoe composition is expected to be relevant to bandsaws used to cut metals. Button addition may be done by inserting the buttons in a mould before it is closed and the flowable plastics is introduced. Other hard materials may likewise be incorporated as discrete objects. The preferred glass fill is a diffuse wear-reducing material.

### VARIATIONS

Other plastics such as "Teflon" (PTFE) or polyethylene, alloys of plastics, or co-moulded shoes may be used as shoes. Co-moulding (apart from the existing glass fill) may be a useful way to place material having a specific property at a most suitable place within the object. A 3-D printed construction process falls within the scope of the invention.

Apart from plastics, moulded or otherwise shaped materials, such as selected metals including brass or bronze may be used as shoes.

### ADVANTAGES.

1. The shapes of the shoes described herein reduces the cost of providing blade guides.
2. Each shoe has four wearing surfaces and each shoe is a simple moulded shape having a slight taper for mould release purposes.
3. The operator can easily remove the shoe, for wearing surface replacement or for cleaning purposes.
4. The operator can't replace either shoe of the blade guide in an off-axis position, so making a bent path for the blade.
5. Shoes can be easily removed for bandsaw decontamination purposes and either separately sterilized and returned, or replaced with new ones.

## Claims

1. A blade guide for use as an accessory for a cutting machine of a type having an elongated saw blade in the form of a band held in tension, the blade having two sides and teeth formed along an edge; the band being carried across a cutting volume by a motor driving at least one of at least two support pulleys; wherein the blade guide consists of a shaft (800), a head (100) and two replaceable guide shoes (101, 102), whereby the shaft (800) is mountable on a frame of the cutting machine in order to support the head (100) in a fixed position relative to the blade of the cutting machine;
the head (100) is configured so as to form a secure yet reversible interlocking connection with each of the two replaceable guide shoes (101, 102) disposable one on each side of the blade; each shoe (101, 102) presenting a selected rubbing surface (105, 106) close to an adjacent side of the blade and thereby when in use limiting sideways deflection of the blade within the volume by contact between a side of the blade and an adjacent rubbing surface (105, 106); wherein each replaceable guide shoe (101, 102) may be reversibly mounted on to the head (100) in one of a plurality of orientations thereby providing a plurality of alternative rubbing surfaces (105, 106),
**characterised in that**,
the head (100) includes a mirror-image pair of a set of two nested parallelogram shapes (204, 204') raised outward from the substance of the head (100); each set being configured in order to fit inside and behind the head (100) and serve, when in use, as a connector for reversibly holding one shoe (101, 102) in place.

2. A blade guide as claimed in claim 1, **characterized in that** each replaceable guide shoe has a symmetrical four-sided profile in order to provide four rubbing surfaces about the periphery of the shoe (101, 102); any one of which surfaces is selected by reversibly attaching the replaceable guide shoe (101, 102) on to the head (100) in a selected one of four orientations.

3. A blade guide as claimed in claim 2, **characterized in that** each guide shoe (101, 102) has a symmetrical structure about three axes: top to bottom (V-V'), left to right (H-H'), and front surface to back surface.

4. A blade guide as claimed in claim 3, **characterized in that** each guide shoe (101, 102) has a construction including:
a. a four-sided peripheral bar configured as a parallelogram shaped profile wherein each one of the four outer sides comprises one separate rubbing surface along an edge of one peripheral bar
b. within a space defined by the parallelogram shaped peripheral bar, a set of four resilient clips capable when in use of engaging with complementary cavities within a supporting shape upon the head (100) is located;
c. the set of resilient clips being capable, when in use, of allowing each guide shoe (101, 102) to be detached from the head (100) by the operator and rotated or replaced.

5. A blade guide as claimed in claim 4, **characterized in that** both of the replaceable guide shoes (101, 102) are identical.

6. A blade guide as claimed in claim 1, **characterized in that** each of the two sets of two nested parallelograms (204, 204') configured upon the head (100) includes an outer restraining group of surfaces having an outline in the form of a parallelogram and disposed in order to make contact with all inner side surfaces of the four-sided profile on one side of one shoe (101, 102), and includes an inner interlocking group of mating surfaces in the form of a second parallelogram including complementary socket areas capable when in use of making a reversible locking contact with corresponding inner detailed and resiliently mounted protrusions upon strips of a web within the interior of the shoe (101, 102).

7. A blade guide as claimed in claim 1, **characterized in that** the shoe (101, 102) is moulded in a thermoplastics selected from a range including glass-filled polyoxymethylene (POM) commonly known as acetal.

8. A blade guide as claimed in claim 7, **characterized in that** the shoe (101, 102) is moulded with a ceramic button surface incorporated within the face of each wearable surface.

## Patentansprüche

1. Eine Blattführung zur Verwendung als Zubehör für eine Schneidmaschine eines Typs mit einem länglichen Sägeblatt in Form eines unter Spannung gehaltenen Bandes, wobei das Blatt zwei Seiten und Zähne aufweist, die entlang einer Kante gebildet sind; wobei das Band durch einen Motor, der mindestens eine von mindestens zwei Stützrollen antreibt, über ein Schneidvolumen getragen wird; wobei die Blattführung aus einer Welle (800), einem Kopf (100) und zwei austauschbaren Führungsschuhen (101, 102) besteht, wodurch die Welle (800) an einem Rahmen der Schneidmaschine montierbar ist, um den Kopf (100) in einer festen Position relativ zu dem Blatt der Schneidmaschine zu stützen;
wobei der Kopf (100) so konfiguriert ist, dass er eine sichere, aber reversible Verriegelungsverbindung mit jedem der zwei austauschbaren Führungsschuhe (101, 102) bildet, von denen einer auf jeder Seite des Blatts angeordnet werden kann; wobei jeder Schuh (101, 102) eine ausgewählte Reiboberfläche (105, 106) nahe einer benachbarten Seite des Blatts aufweist und dadurch bei Verwendung die seitliche Ablenkung des Blatts innerhalb des Volumens durch Kontakt zwischen einer Seite des Blatts und einer benachbarten Reiboberfläche (105, 106) begrenzt; wobei jeder austauschbare Führungsschuh (101, 102) reversibel an dem Kopf (100) in einer von einer Vielzahl von Ausrichtungen montiert werden kann, wodurch eine Vielzahl von alternativen Reiboberflächen (105, 106) bereitgestellt wird,
**dadurch gekennzeichnet, dass**
der Kopf (100) ein spiegelbildliches Paar eines Satzes von zwei verschachtelten Parallelogrammgestalten (204, 204') umfasst, die von der Masse des Kopfes (100) nach außen angehoben sind; wobei jeder Satz so konfiguriert ist, dass er in und hinter den Kopf (100) passt und bei Verwendung als Verbinder zum reversiblen Halten eines Schuhs (101, 102) an Ort und Stelle dient.

2. Blattführung gemäß Anspruch 1, **dadurch gekennzeichnet, dass** jeder austauschbare Führungsschuh ein symmetrisches vierseitiges Profil aufweist, um vier Reiboberflächen um den Umfang des Schuhs (101, 102) bereitzustellen; wobei jede dieser Oberflächen durch reversibles Befestigen des austauschbaren Führungsschuhs (101, 102) an dem Kopf (100) in einer ausgewählten von vier Ausrichtungen ausgewählt wird.

3. Blattführung gemäß Anspruch 2, **dadurch gekennzeichnet, dass** jeder Führungsschuh (101, 102) eine symmetrische Struktur um drei Achsen aufweist: von oben nach unten (V-V'), von links nach rechts (H-H') und von der vorderen Oberfläche zu der hinteren Oberfläche.

4. Blattführung gemäß Anspruch 3, **dadurch gekennzeichnet, dass** jeder Führungsschuh (101, 102) eine Konstruktion aufweist, die Folgendes umfasst:
a. einen vierseitigen Umfangsstab, der als ein als Parallelogramm gestaltetes Profil konfiguriert ist, wobei jede der vier äußeren Seiten eine separate Reiboberfläche entlang einer Kante eines Umfangsstabs beinhaltet;
b. innerhalb eines Raums, der durch den als Parallelogramm gestalteten Umfangsstab definiert ist, ein Satz von vier elastischen Klammern, die bei Verwendung mit komplementären Hohlräumen innerhalb einer Stützgestalt auf dem Kopf (100) in Eingriff gebracht werden können, befindlich ist;
c. wobei der Satz von elastischen Klammern bei Verwendung in der Lage ist, zu ermöglichen, dass jeder Führungsschuh (101, 102) von dem Kopf (100) durch die Bedienperson gelöst und gedreht oder ausgetauscht wird.

5. Blattführung gemäß Anspruch 4, **dadurch gekennzeichnet, dass** beide austauschbaren Führungsschuhe (101, 102) identisch sind.

6. Blattführung gemäß Anspruch 1, **dadurch gekennzeichnet, dass** jeder der zwei Sätze von zwei verschachtelten Parallelogrammen (204, 204'), die auf dem Kopf (100) konfiguriert sind, eine äußere Rückhaltegruppe von Oberflächen umfasst, die einen Umriss in Form eines Parallelogramms aufweisen und angeordnet sind, um Kontakt mit allen inneren Seitenoberflächen des vierseitigen Profils auf einer Seite eines Schuhs (101, 102) herzustellen, und eine innere Verriegelungsgruppe von zusammenpassenden Oberflächen in Form eines zweiten Parallelogramms umfasst, das komplementäre Fassungsbereiche umfasst, die bei Verwendung in der Lage sind, einen reversiblen Sperrkontakt mit entsprechenden inneren detaillierten und elastisch montierten Vorsprüngen auf Streifen eines Stegs innerhalb des Inneren des Schuhs (101, 102) herzustellen.

7. Blattführung gemäß Anspruch 1, **dadurch gekennzeichnet, dass** der Schuh (101, 102) aus einem Thermoplasten ausgeformt ist, der aus einem Bereich ausgewählt ist, der glasgefülltes Polyoxymethylen (POM) umfasst, das allgemein als Acetal bekannt ist.

8. Blattführung gemäß Anspruch 7, **dadurch gekennzeichnet, dass** der Schuh (101, 102) mit einer keramischen Knopfoberfläche ausgeformt ist, die in die Fläche jeder abnutzbaren Oberfläche integriert ist.

## Revendications

1. Un guide-lame destiné à être utilisé comme accessoire pour une machine de coupe d'un type ayant une lame de scie allongée sous la forme d'un ruban maintenu en tension, la lame ayant deux côtés et des dents formées le long d'un bord ; le ruban étant porté de part en part d'un volume de coupe par un moteur entraînant au moins une poulie parmi au moins deux poulies de support ; où le guide-lame est constitué d'un arbre (800), d'une tête (100) et de deux sabots (101, 102) de guidage remplaçables, moyennant quoi l'arbre (800) peut être monté sur un châssis de la machine de coupe afin de supporter la tête (100) dans une position fixe par rapport à la lame de la machine de coupe ;
la tête (100) est configurée de manière à former un raccordement à verrouillage réciproque sécurisé mais réversible avec chacun des deux sabots (101, 102) de guidage remplaçables pouvant être disposés l'un sur chaque côté de la lame ; chaque sabot (101, 102) présentant une surface de frottement (105, 106) sélectionnée près d'un côté adjacent de la lame et ainsi, lors de l'utilisation, limitant une déviation latérale de la lame au sein du volume par contact entre un côté de la lame et une surface de frottement (105, 106) adjacente ; où chaque sabot (101, 102) de guidage remplaçable peut être monté de façon réversible sur la tête (100) dans une orientation parmi une pluralité d'orientations fournissant ainsi une pluralité de surfaces de frottement (105, 106) alternatives,
**caractérisé en ce que**,
la tête (100) inclut une paire en image miroir d'un ensemble de deux formes de parallélogramme imbriqués (204, 204') surélevés vers l'extérieur à partir du corps de la tête (100) ; chaque ensemble étant configuré afin de s'adapter à l'intérieur et derrière la tête (100) et servir, lors de l'utilisation, de raccord pour maintenir de façon réversible un sabot (101, 102) en place.

2. Un guide-lame tel que revendiqué dans la revendication 1, **caractérisé en ce que** chaque sabot de guidage remplaçable a un profil symétrique à quatre côtés afin de fournir quatre surfaces de frottement autour de la périphérie du sabot (101, 102) ; l'une quelconque de ces surfaces étant sélectionnée en fixant de façon réversible le sabot (101, 102) de guidage remplaçable sur la tête (100) dans une orientation sélectionnée parmi quatre orientations.

3. Un guide-lame tel que revendiqué dans la revendication 2, **caractérisé en ce que** chaque sabot (101, 102) de guidage a une structure symétrique autour de trois axes : de haut en bas (V-V'), de gauche à droite (H-H'), et de surface avant à surface arrière.

4. Un guide-lame tel que revendiqué dans la revendication 3, **caractérisé en ce que** chaque sabot (101, 102) de guidage a une construction incluant :
a. une barre périphérique à quatre côtés configurée comme un profil en forme de parallélogramme où chacun des quatre côtés extérieurs comprend une surface de frottement distincte le long d'un bord d'une barre périphérique ;
b. au sein d'un espace défini par la barre périphérique en forme de parallélogramme, un ensemble de quatre clips élastiques aptes, lors de l'utilisation, à se mettre en prise avec des cavités complémentaires au sein d'une forme portante sur laquelle la tête (100) est située ;
c. l'ensemble de clips élastiques étant aptes, lors de l'utilisation, à permettre à chaque sabot (101, 102) de guidage d'être détaché de la tête (100) par l'opérateur et tourné ou remplacé.

5. Un guide-lame tel que revendiqué dans la revendication 4, **caractérisé en ce que** les deux sabots (101, 102) de guidage remplaçables sont identiques.

6. Un guide-lame tel que revendiqué dans la revendication 1, **caractérisé en ce que** chacun des deux ensembles de deux parallélogrammes imbriqués (204, 204') configurés sur la tête (100) inclut un groupe de retenue extérieur de surfaces ayant un contour sous la forme d'un parallélogramme et disposé afin d'établir un contact avec toutes les surfaces latérales intérieures du profil à quatre côtés sur un côté d'un sabot (101, 102), et inclut un groupe de verrouillage réciproque intérieur de surfaces d'accouplement sous la forme d'un deuxième parallélogramme incluant des zones d'emboîtement complémentaires aptes, lors de l'utilisation, à établir un contact de verrouillage réversible avec des saillies intérieures correspondantes détaillées et montées de façon élastique sur des bandes d'une lame centrale au sein de l'intérieur du sabot (101, 102).

7. Un guide-lame tel que revendiqué dans la revendication 1, **caractérisé en ce que** le sabot (101, 102) est moulé dans un thermoplastique sélectionné dans une gamme incluant du polyoxyméthylène (POM) chargé de verre couramment connu sous le nom d'acétal.

8. Un guide-lame tel que revendiqué dans la revendication 7, **caractérisé en ce que** le sabot (101, 102) est moulé avec une surface de bouton en céramique incorporée au sein de la face de chaque surface pouvant s'user.
